(19) Europäisches Patentamt
European Patent Office
Office européen des brevets

(11) **EP 3 227 976 B1**

(12) **FASCICULE DE BREVET EUROPEEN**

(45) Date de publication et mention
de la délivrance du brevet:
**29.07.2020 Bulletin 2020/31**

(21) Numéro de dépôt: **15787945.3**

(22) Date de dépôt: **23.10.2015**

(51) Int Cl.:
*H01S 3/08* (2006.01)     *H01S 3/23* (2006.01)
*H01S 3/094* (2006.01)    *H01S 3/081* (2006.01)
*H01S 3/11* (2006.01)     *H01S 3/106* (2006.01)
*H01S 3/16* (2006.01)     *H01S 3/22* (2006.01)

(86) Numéro de dépôt international:
**PCT/EP2015/074634**

(87) Numéro de publication internationale:
**WO 2016/087124 (09.06.2016 Gazette 2016/23)**

(54) **SYSTEME D'EMISSION LASER BI-FREQUENCE**

BI-FREQUENZ-LASEREMISSIONSSYSTEM

BI-FREQUENCY LASER EMISSION SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.12.2014 FR 1461734**

(43) Date de publication de la demande:
**11.10.2017 Bulletin 2017/41**

(73) Titulaire: **Centre National de la Recherche
Scientifique
75016 Paris (FR)**

(72) Inventeur: **PIQUE, Jean-Paul
F-38330 Saint Ismier (FR)**

(74) Mandataire: **Joubert, Cécile et al
Marks & Clerk France
Counseils en Propriete Industrielle
Immeuble "Visium"
22, avenue Aristide Briand
94117 Arcueil Cedex (FR)**

(56) Documents cités:
• **NENCHEV M ET AL: "Controlled
time-delayed-pulses operation of a
two-wavelength combined dye-Ti:Al2O3 laser",
OPTICS COMMUNICATIONS, NORTH-HOLLAND
PUBLISHING CO. AMSTERDAM, NL, vol. 86, no.
5, 1 décembre 1991 (1991-12-01), pages 405-408,
XP024455803, ISSN: 0030-4018, DOI:
10.1016/0030-4018(91)90504-7 [extrait le
1991-12-01]**
• **C G Treviño-Palacios ET AL: "Dual wavelength
continuous wave laser using a birefringent filter",
J. Europ. Opt. Soc. Rap. Public, 1 janvier 2013
(2013-01-01), page 13021, XP055204452, DOI:
10.2971/jeos.2013.13021] Extrait de l'Internet:
URL:http://www.jeos.org/index.php/jeos_rp/
article/view/13021/958 [extrait le 2015-07-23] cité
dans la demande**
• **PALLAS FLORENT ET AL: "Stable
dual-wavelength microlaser controlled by the
output mirror tilt angle", APPLIED PHYSICS
LETTERS, AMERICAN INSTITUTE OF PHYSICS,
US, vol. 99, no. 24, 12 décembre 2011
(2011-12-12), pages 241113-241113,
XP012152695, ISSN: 0003-6951, DOI:
10.1063/1.3669530 [extrait le 2011-12-14] cité
dans la demande**
• **J. P. PIQUE ET AL: "High sensitivity intracavity
stimulated emission pumping", APPLIED
OPTICS, vol. 26, no. 15, 1 août 1987 (1987-08-01),
page 3103, XP055204645, ISSN: 0003-6935, DOI:
10.1364/AO.26.003103 cité dans la demande**

- TAKAHASHI ET AL: "Organic nonlinear optical DAST crystals for electro-optic measurement and terahertz wave generation", JOURNAL OF PHOTOCHEMISTRY AND PHOTOBIOLOGY, A: CHEMISTRY, ELSEVIER SEQUOIA, LAUSANNE, CH, vol. 183, no. 3, 25 octobre 2006 (2006-10-25), pages 247-252, XP005663704, ISSN: 1010-6030, DOI: 10.1016/J.JPHOTOCHEM.2006.03.027
- SASAKI Y ET AL: "TERAHERTZ-WAVE SURFACE-EMITTED DIFFERENCE FREQUENCY GENERATION IN SLANT-STRIPE-TYPE PERIODICALLY POLED LINBO3 CRYSTAL", APPLIED PHYSICS LETTERS, AMERICAN INSTITUTE OF PHYSICS, US, vol. 81, no. 18, 28 octobre 2002 (2002-10-28), pages 3323-3325, XP001142405, ISSN: 0003-6951, DOI: 10.1063/1.1518779
- JEAN-PAUL PIQUE ET AL: "<title>Polychromatic laser guide star using a single laser at 330 nm</title>", PROCEEDINGS OF SPIE, vol. 6272, 14 juin 2006 (2006-06-14), page 62723D, XP055204462, ISSN: 0277-786X, DOI: 10.1117/12.692350

**Description**

DOMAINE DE L'INVENTION

La présente invention concerne le domaine des lasers bi-fréquence, c'est-à-dire des lasers aptes à laser sur deux fréquences différentes. La présente invention concerne également la génération d'onde TeraHertz à partir du faisceau laser bi-fréquence.

ETAT DE LA TECHNIQUE

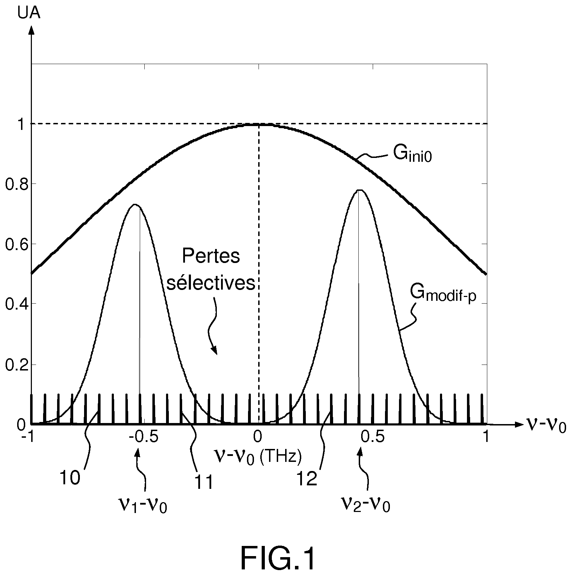

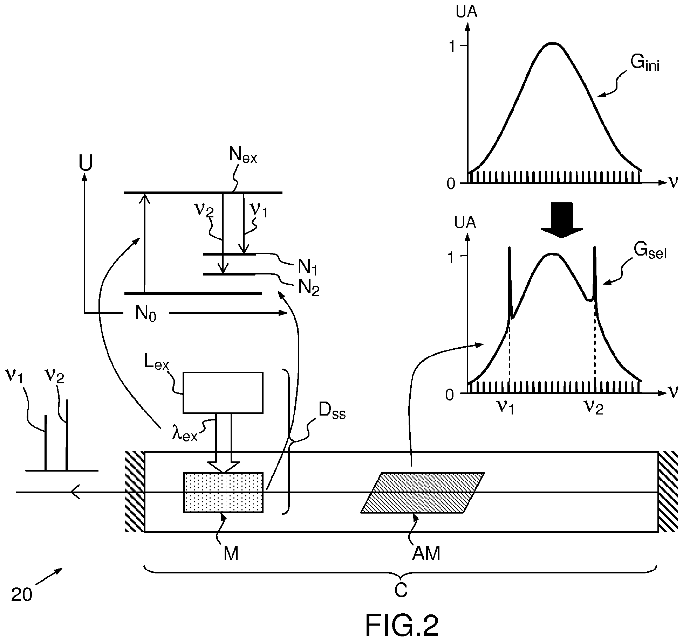

Les lasers aptes à laser sur deux fréquences présentent un intérêt dans plusieurs domaines.
Un premier domaine est l'obtention d'une raie cohérente présentant une fréquence TeraHertz (THz), typiquement comprise entre 30 GHz et quelques THz, par différence de fréquence dans un cristal mélangeur.
En effet pendant longtemps le domaine THz (fréquence: 0.1- 30 THz, longueur d'onde : 3mm-10$\mu$m) n'a pas été exploré par manque de sources suffisamment intenses et de détecteurs d'usage facile, alors qu'aujourd'hui les applications nouvelles sont nombreuses et montent en puissance.
La transparence dans cette plage de fréquence de matériaux par ailleurs opaques dans le visible ou l'infrarouge conduit à des applications dans l'imagerie pour le contrôle industriel, la médecine ou pour la sécurité (inspection des personnes).
L'existence à ces fréquences de signatures spectrales uniques pour certaines molécules conduit à des applications telles que l'identification de molécules par spectroscopie : environnement, sécurité, biophysique, astrophysique...
La possibilité de moduler ces ondes à très hautes fréquences conduit à des applications dans le domaine des télécoms très haut débit à courtes distances.
Un deuxième domaine d'application est l'utilisation directe du doublet émis, pour des applications RADAR, LIDAR... Pour des méthodes interférométriques RADAR utilisant un laser bi-fréquence accordable il est possible de mesurer et de détecter une cible lointaine faiblement réfléchissante. La technique LIDAR dite DIAL utilise aussi un laser bi-fréquence (une des fréquences est accordée sur la raie d'absorption d'un polluant et l'autre en dehors).
Un type de laser bi-fréquence selon l'état de la technique est un laser dans lequel on insère un élément spectral sélectif intra-cavité appelé étalon, permettant une émission sur deux raies laser.
Un exemple est décrit dans la publication « Dual wavelength continuous wave laser using a biréfringent filter , J.Europ. Soc. Rap. Public., 8, 13021, (2013) Trevino-Palacios et al», qui décrit un laser solide à Titane Saphir (Ti :Sa) présentant une large courbe de gain initiale $G_{ini0}$ centrée sur une fréquence $v_0$ sensiblement égale à 366.5 THz (correspondant à une longueur d'onde sensiblement égale à 818 nm) illustrée figure 1, les raies 10, 11, 12 représentant des modes longitudinaux de la cavité laser. Un étalon est inséré dans la cavité, comme illustré figure 2 de la publication précitée. Par effet Fabry-Perot l'étalon permet d'introduire des pertes sélectives dans la cavité, ce qui modifie le gain du milieu laser en un gain $G_{modif-p}$ forçant le laser à laser sur les fréquences $v_1$ et $v_2$ pour lesquelles les pertes sont minimales, tel qu'illustré figure 1.
Un autre exemple décrit dans la publication « Stable dual-wavelengh microlaser controlled by the output mirror tilt angle, Appl. Phys. Lett. 99, 241113 (2011), Florent Pallas et al » décrit un laser solide néodyme dopé GdVO$_4$, présentant un miroir incliné permettant au laser de laser sur deux fréquences proches. Les inventeurs pensent que ce résultat est dû au fait que l'inclinaison du miroir induit des chemins optiques différents pour les deux fréquences. Un inconvénient de ce dispositif est que les deux fréquences sortent suivant deux angles différents, et que l'écart angulaire et le rapport d'intensité dépendent du réglage.
Pour les deux systèmes décrits ci-dessus, il y a une compétition du gain entre les deux fréquences $v_1$ et $v_2$, ce qui entraînent une émission instable des deux raies laser émises, les deux raies lasant difficilement en même temps et selon une intensité variable dans le temps. Les deux modes $v_1$ et $v_2$ sont peu (ou pas) couplés et ils lasent de manière aléatoires (phases aléatoires).
De plus, les valeur des fréquences $v_1$ et $v_2$ ne sont pas intrinsèques et dépendent de paramètres externes tels que le réglage du laser et la température.
Enfin les raies obtenues aux deux fréquences sont généralement larges, car typiquement l'élément sélectif qui affine la raie ne peut pas avoir une finesse élevée (quelques dizaines seulement).
Un but de la présente invention est de palier aux inconvénients précités en proposant un système d'émission laser bi-fréquence dont les deux faisceaux lasers correspondants sont colinéaires, présentent une émission stable aux deux fréquences et des raies spectralement très fines.

DESCRIPTION DE L'INVENTION

La présente invention a pour objet un système d'émission laser bi-fréquence comprenant :

- un laser dit principal comprenant un milieu amplificateur disposé dans une cavité laser, apte à laser par pompage dans ladite cavité et selon un gain laser initial fonction d'une fréquence optique,
- un dispositif de sélection spectrale comprenant :

  *un milieu moléculaire ou monoatomique en phase gazeuse disposé dans ladite cavité laser, et
  *un laser dit d'excitation présentant une longueur d'onde d'excitation configurée pour exciter, par absorption optique, un niveau énergétique d'excitation du milieu,
  *le milieu étant configuré pour émettre, par désexcitation radiative dudit niveau énergétique d'excitation vers un premier et un deuxième niveaux énergétiques de plus basse énergie , au moins un doublet de fréquence comprenant une première fréquence associée audit premier niveau et une deuxième fréquence associée audit deuxième niveau, lesdites première et deuxième fréquences présentant chacune une valeur comprise dans ledit gain laser initial du milieu amplificateur et choisie de manière à ce qu'un rayonnement associé ne soit pas réabsorbé par ledit milieu,

- le laser d'excitation étant configuré pour que la transition entre un niveau fondamental dudit milieu et ledit niveau énergétique d'excitation soit saturée, et la densité moléculaire ou atomique étant suffisamment élevée, de sorte que ledit gain laser initial soit modifié en un gain laser sélectif par augmentation locale dudit gain laser initial auxdites fréquences ($v_1$, $v_2$) dudit doublet, permettant audit laser principal de laser en phase, simultanément et uniquement sur lesdites fréquences du doublet.

Avantageusement, -le milieu est un milieu moléculaire diatomique configuré pour générer une pluralité de doublets de type ro-vibrationnel,

- ledit niveau énergétique d'excitation correspond à un niveau de rotation et de vibration d'un état électronique excité,
- les premier et deuxième niveaux énergétiques appartiennent au même niveau électronique et sont caractérisés par un même état vibrationnel et respectivement un premier et un deuxième état rotationnel de ladite molécule, les états rotationnels présentant respectivement un nombre quantique de rotation tel que la différence est égale à 2 en valeur absolue.

Avantageusement le milieu moléculaire diatomique comprend de l'iode.

Selon un mode de réalisation, le laser d'excitation est configuré pour être accordable en longueur d'onde de sorte que le dispositif de sélection spectrale soit apte à sélectionner au moins un doublet parmi une pluralité de doublets possibles, rendant ledit système accordable en doublet de fréquence.

Selon une variante, le laser principal comprend en outre un dispositif limitatif de gain laser disposé dans ladite cavité et configuré pour réduire la largeur spectrale du gain laser sélectif de manière à ce que ledit système d'émission soit configuré pour laser sur un doublet unique.

Avantageusement le dispositif de gain laser est en outre configuré pour ajuster le gain laser sélectif de sorte que ledit gain laser sélectif présente une valeur identique pour lesdites première et deuxième fréquences dudit doublet unique, des première et deuxième raies d'émission dudit laser principal, respectivement auxdites première et deuxième fréquence, présentant alors des intensités respectives identiques.

Préférentiellement le dispositif limitatif de gain est une lame de quartz réglable en rotation.

Préférentiellement, le laser principal fonctionne en régime impulsionnel. Avantageusement, le laser principal est un laser Ti:Sa présentant une cavité en Z.

Avantageusement la saturation et l'obtention de la densité moléculaire sont obtenues par chauffage d'une cellule comprenant le milieu en phase gazeuse.

Selon un autre aspect, l'invention concerne un système de génération d'une onde de fréquence TeraHz comprenant :

- un système d'émission laser bi-fréquence selon l'invention, dans lequel le dispositif de sélection spectrale est configuré de sorte que la différence entre lesdites première et deuxième fréquences soit comprise entre 30 GHz et 10 THz, et comprenant en outre :
- un composant mélangeur configuré pour être éclairé par un faisceau laser issu dudit système et pour générer une onde présentant une fréquence égale à ladite différence.

Selon un autre aspect, l'invention concerne un système d'émission laser bi-fréquence décalé en fréquence comprenant :

- un système d'émission laser bi-fréquence selon l'invention,

- un composant optique disposé à l'intérieur de la cavité et configuré pour décaler chacune desdites première et deuxième fréquences d'une valeur de décalage à chaque aller-retour dans la cavité d'un photon auxdites fréquences, ladite valeur de décalage correspondant à une radiofréquence. Avantageusement, le composant optique est un cristal acousto-optique configuré pour fonctionner dans l'ordre 1.

D'autres caractéristiques, buts et avantages de la présente invention apparaîtront à la lecture de la description détaillée qui va suivre et en regard des dessins annexés donnés à titre d'exemples non limitatifs et sur lesquels :

- la figure 1 déjà citée décrit la modification du gain, par introduction de pertes sélectives, effectuée sur les lasers de l'état de la technique pour obtenir un rayonnement laser bi-fréquence,
- la figure 2 décrit un système d'émission laser bi-fréquence selon l'invention,
- la figure 3 illustre les niveaux énergétiques et la transition associée d'un milieu atomique pour lequel les niveaux de dé-excitation sont deux états électronique différents,
- la figure 4 illustre la structure électronique d'une molécule,
- la figure 5 illustre l'émission d'un doublet PR lors de la dé-excitation radiative d'un niveau B excité par une raie P,
- la figure 6 illustre l'émission d'un doublet PR lors de la dé-excitation radiative d'un niveau B excité par une raie R,
- la figure 7 montre la variation de $\Delta v$ en fonction du nombre quantique de rotation J,
- la figure 8 illustre un mode de réalisation de l'invention comprenant un dispositif limitatif de gain,
- la figure 9 illustre un exemple d'implémentation du système selon l'invention,
- la figure 10 illustre les impulsions du laser d'excitation et du laser principal,
- la figure 11 décrit une suite de spectres expérimentaux émis par le laser principal pour un laser d'excitation positionné sur la bande 16-1, pour J variant de 21 à 101,
- la figure 12 illustre un système de génération d'une onde THz à partir du système d'émission laser bi-fréquence.
- la figure 13 illustre un système laser bi-fréquence à décalage de fréquence intra-cavité selon l'invention.

DESCRIPTION DETAILLE DE L'INVENTION

La figure 2 décrit un système 20 d'émission laser bi-fréquence selon l'invention.

Le système 20 comprend tout d'abord un laser dit principal comprenant un milieu amplificateur AM disposé dans une cavité laser C. Le laser principal est classique, apte à laser dans la cavité lorsque le milieu laser est pompé avec une pompe adéquat également classique. Le laser principal présente une courbe de gain laser, dénommé plus simplement gain laser initial correspondant à la valeur du gain du milieu amplificateur en fonction de la valeur de la fréquence optique v (ou de la longueur d'onde correspondante) dénommé $G_{ini}(v)$ et illustré figure 2.

Le système 20 comprend en outre un dispositif de sélection spectrale $D_{ss}$ comprenant un milieu moléculaire ou monoatomique M en phase gazeuse disposé dans la cavité laser C, et un laser dit d'excitation $L_{ex}$ présentant une longueur d'onde d'excitation $\lambda_{ex}$ configurée pour exciter, par absorption optique, un niveau énergétique d'excitation $N_{ex}$ du milieu M à partir d'un niveau dit fondamental $N_0$ thermiquement peuplé.

Le milieu est par ailleurs configuré pour émettre, par dé-excitation radiative du niveau énergétique d'excitation $N_{ex}$ vers un premier niveau énergétique $N_1$ et un deuxième niveaux énergétique $N_2$ de plus basse énergie , au moins un doublet de fréquence comprenant une première fréquence $v_1$ associée audit premier niveau $N_1$ et une deuxième fréquence $v_2$ associée audit deuxième niveau $N_2$.

Des exemples de milieu moléculaire et monoatomique sont décrits plus loin, ainsi que des type de niveaux énergétique d'excitation et de dé-excitation $N_1$ et $N_2$. La condition pour qu'un milieu gazeux soit utilisable pour l'invention est que la molécule ou l'atome puisse présenter un gain sur au moins deux transitions, permettant d'obtenir les deux fréquences $v_1$ et $v_2$.

Les fréquences $v_1$ et $v_2$ présentent chacune une valeur comprise dans le gain laser initial du milieu amplificateur AM, c'est-à-dire que le laser principal est apte à laser sur ces fréquences. De plus les valeurs de ces fréquences sont choisies de manière à ce que le rayonnement associé ne soit pas réabsorbé par le milieu M.

Le principe du système selon l'invention est que l'on force le milieu amplificateur AM du laser principal à laser de manière stable sur le doublet ($v_1$, $v_2$) et seulement sur ce doublet, d'où le choix de fréquences ($v_1$, $v_2$) comprises dans la courbe de gain du milieu AM et non réabsorbées par le milieu gazeux.

Pour obtenir ce résultat, le laser d'excitation doit en outre, être configuré pour que la transition entre le niveau fondamental $N_0$ du milieu M et le niveau énergétique d'excitation $N_{ex}$ soit saturée. La saturation de la transition est atteinte lorsque l'intensité du laser d'excitation est telle que la population du niveau excité $N_{ex}$ est quasiment égale à celle du niveau fondamental $N_0$.

Lorsque l'intensité du laser d'excitation atteint la saturation, il s'établit un couplage non linéaire entre les deux modes correspondant aux deux fréquences qui lasent alors en phase. Ce fonctionnement peut se comparer au fonctionnement en mode bloqué classique sauf qu'ici deux modes seulement sont concernés. Ainsi la saturation de la transition entre le niveau fondamental du milieu M et le niveau énergétique d'excitation permet d'obtenir un lasage simultané sur les deux fréquences.

De plus la densité moléculaire ou atomique du milieu gazeux M doit être suffisamment élevée. Il n'est pas possible de quantifier dans l'absolu la valeur de la densité moléculaire ou atomique. La densité moléculaire ou atomique est suffisamment élevée lorsque le laser principal se met à laser uniquement sur les modes $v_1$ et $v_2$. Tant que la densité n'est pas suffisante le laser principal lase aussi sur l'ensemble des modes (>1000) situés sous la courbe de gain. Il y a alors un fond continu spectral.

Lorsque ces deux conditions sont respectées, le gain laser initial $G_{ini}(v)$ est modifié en un gain laser sélectif $G_{sel}(v)$, également illustré figure 2, par augmentation locale du gain laser initial aux fréquences $v_1$ et $v_2$ du doublet. Le laser principal lase alors en phase, simultanément et uniquement sur les fréquences $v_1$, $v_2$ du doublet.

Il est à noter que le laser d'excitation du dispositif $D_{ss}$ n'est pas configuré pour que le milieu gazeux M lase lui-même, l'inversion de population induite dans le milieu M est inférieure au seuil de lasage. L'excitation du milieu M, et l'émission spontanée et stimulée sous la forme d'au moins un doublet $v_1$, $v_2$ qui en résulte, ne sert qu'à rajouter suffisamment de gain à la courbe $G_{ini}$ du milieu AM de manière très sélective, constituant ainsi une sorte de filtre spectral positif.

Contrairement à l'état de la technique qui introduit des pertes sélectives pour maximiser le gain aux fréquences d'intérêt, le système 20 selon l'invention augmente très sélectivement le gain laser auxdites fréquences.

En effet, ce filtre positif a une finesse de l'ordre de 1000 alors que les systèmes à pertes utilisent des filtres dont la finesse ne dépasse pas quelques dizaines.

Le système selon l'invention permet ainsi à un laser unique, de laser simultanément sur au moins deux fréquences d'un doublet ($v_1$, $v_2$), les rayonnements correspondant à ces deux fréquences étant colinéaires.

Du fait de l'augmentation sélective du gain, le système ne lase que sur les doublets issus de la dé-excitation du milieu gazeux, et pas sur les autres fréquences de la courbe de gain du laser principal.

De plus, le choix des niveaux $N_1$ et $N_2$ permet de choisir les valeurs des fréquences $v_1$ et $v_2$, par exemple pour que leur différence $\Delta v$ soit égale à une fréquence TeraHz d'intérêt.

A noter que des systèmes comprenant un milieu gazeux excité et disposé dans une cavité laser ont été développés pour des applications très différentes, de type spectroscopie haute résolution, tel que décrit dans « High sensitivity intracavity stimulated emission pumping, Applied Optics, vol 26, n°15, 1987, Pique et al ». Dans ce document, le milieu gazeux est excité en continu très en dessous de son niveau de saturation et de plus, pour éviter les élargissements collisionnels, la densité moléculaire doit être faible pour une spectroscopie haute résolution. Enfin, la zone spectrale choisie présente de fortes absorptions. Ces trois conditions sont en opposition avec celles de l'invention.

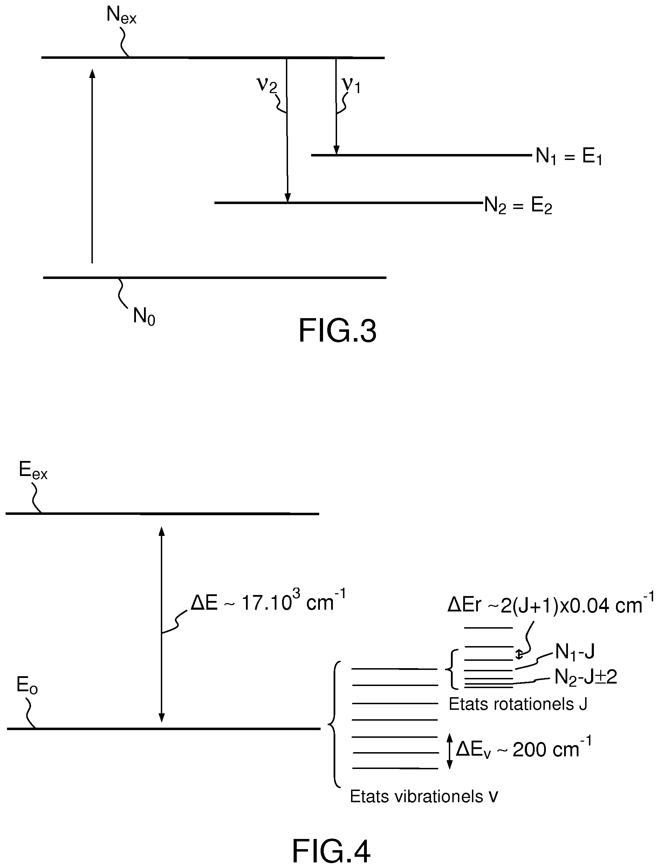

Selon une première variante de l'invention, le milieu gazeux est constitué d'un milieu atomes, comme par exemple le Rubidium. Le niveau d'énergie d'excitation est dans ce cas un niveau fin ou hyperfin d'un état électronique excité $N_{ex}$, comme illustré figure 3. Les deux niveaux énergétiques de dé-excitation $N_1$ et $N_2$ peuvent être des niveaux fins ou hyperfins du même état électronique, ou de deux états électroniques différents (cas illustré figure 3).

Selon une deuxième variante préférée, le milieu gazeux est un milieu moléculaire, la molécule étant préférentiellement di-atomique et préférentiellement mononucléaire, tel que l'iode $I_2$ ou le Brome $Br_2$. La désexcitation en doublets PR suffisamment espacés est spécifique de ces molécules. Avec des constantes de rotation élevées elles sont de bons candidats pour la génération d'onde TéraHertz.

Un avantage de l'iode est que la physique des transitions de cette molécule est bien connue, et que la plage de longueurs d'onde accessibles pour $\lambda_1$ ($v_1$), $\lambda_2$ ($v_2$) est intéressante, typiquement [800 nm ; 1.3 $\mu$m], en tenant compte de la réabsorption par le gaz d'iode en dessous de 800 nm. Cette plage de longueur d'onde est compatible avec des courbes de gain $G_{ini}(v)$ de laser principaux classiques et bien maîtrisés (lasers solides Ti/Sa ou YAG par exemple).

De manière générale la structure électronique d'une molécule est illustrée figure 4.

Un niveau électronique $E_0$ ou $E_{ex}$ est subdivisé en une pluralité d'états vibrationnels de la molécule indicés par un nombre quantique de vibration v, chaque état vibrationnel se subdivisant en une pluralité d'états rotationnels indicés par un nombre quantique de rotation J. En particulier pour une molécule diatomique mononucléaire, une transition optique se fait avec la règle de sélection $\Delta J = \pm 1$ et l'énergie des niveaux vibrationnels et rotationels évolue comme des polynômes (dits de Dunham) respectivement en (v+1/2) et J(J+1).

Un état ro-vibrationnel correspond à une valeur déterminée de v et une valeur de J qui obéissent à des règles quantiques déterminées.

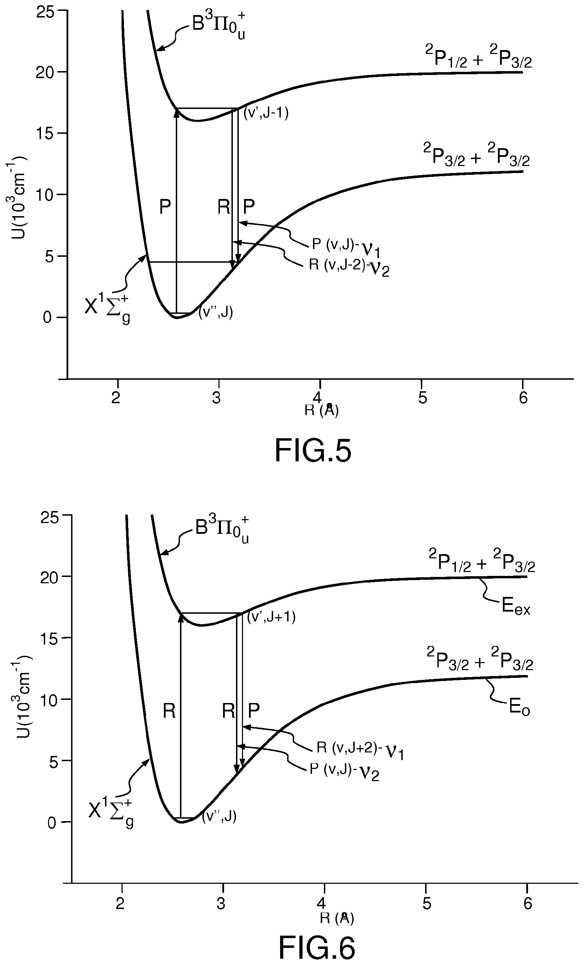

Afin de mieux expliciter les mécanismes de transition utilisés dans l'invention, les figures 5 et 6 illustre un exemple de transitions possibles de la molécule d'iode $I_2$, bien connue. Les principales caractéristiques et avantages de cet exemple sont valables pour d'autres molécules di-atomique tel que le Brome.

Un laser d'excitation $L_{ex}$ de faible puissance excite, à partir d'un état fondamental thermiquement peuplé, un état ro-vibrationnel de l'état électronique excité. Des conditions expérimentales judicieuses consistent à exciter l'état B par la voie interne du potentiel et de stimuler l'émission par la voie externe (respectivement parties gauche et droite du potentiel par rapport à son minimum, voir figures 5-6), là où la molécule séjourne le plus longtemps.

En choisissant la longueur d'onde d'excitation $\lambda_{ex}$ et sa largeur spectrale, le laser d'excitation $L_{ex}$ (« pump » dans la

littérature du domaine de la spectroscopie) excite, à partir d'un état ro-vibrationnel (v",J) appartenant à un l'état électronique fondamental $X^1\Sigma^+_g$, au moins un état ro-vibrationnel donné (v',J-1) ou (v', J+1) appartenant à un état électronique excité $B^3\Pi0^+_u$. L'excitation peut se faire par une raie P ($\Delta J$=-1) ou R ($\Delta J$=+1).

L'état ro-vibrationnel (v', J-1) est excité avec une raie de type P ($\Delta J$=-1) comme illustré figure 5, tandis que l'état ro-vibrationnel (v',J+1) est excité avec une raie de type R ($\Delta J$=+1) comme illustré figure 6.

A noter que d'autres choix d'état électronique d'excitation sont possibles, par exemple l'état électronique excité E, qui s'excite avec une longueur d'onde dans l'UV.

Ainsi le choix de la longueur d'onde d'excitation $\lambda_{ex}$ avec suffisamment de précision (centre et largeur spectrale) permet de choisir le nombre quantique de rotation J, le point de départ dans le niveau de départ soit la valeur de v" et de J, et le point excité soit la valeur de v", la valeur rotationnelle du niveau excité étant nécessairement J-1 ou J+1 comme expliqué plus haut.

Le choix d'une raie P ou R et des valeurs de J, v" et v' se fait simplement en ajustant $\lambda_{ex}$. Mais il faut noter que expérimentalement la largeur spectrale du laser d'excitation n'a pas besoin d'être très fine, elle peut être typiquement de 10-15 GHz. Ceci est du à plusieurs effets sélectifs qui se combinent positivement (règles de sélection, peuplement thermique, Franck-Condon ...). Les contraintes sur le laser d'excitation sont alors faibles.

Un laser d'excitation spectralement très fin (~qq MHz), a cependant l'avantage d'utiliser moins de puissance.

A partir de cet état excité, l'émission spontanée et stimulée se produit sous forme de doublets PR sur l'ensemble des états vibrationnels de l'état électronique fondamental X. La molécule di-atomique ($I_2$ ici) est configurée pour générer une pluralité de doublets ro-vibrationnels PR.

Le premier niveau énergétique $N_1$ et le deuxième niveau énergétique $N_2$ « d'arrivée » appartiennent au même niveau électronique, ici l'état fondamental $X^1\Sigma^+_g$ et correspondent également à des états ro-vibrationnels dont les nombres quantiques obéissent à des règles de sélection prédéterminées connues. Ainsi, les deux états « d'arrivée » sont caractérisés par un même état vibrationnel v et respectivement un premier état rotationnel de la molécule indicé par un nombre quantique J et un deuxième état rotationnel qui a nécessairement un nombre quantique associé J+/- 2 : les états rotationnels des niveaux $N_1$ et $N_2$ « d'arrivée » présentent respectivement un nombre quantique de rotation tel que la différence est égale à 2 en valeur absolue.

Le laser d'excitation ne peut à lui seul permettre de ne sélectionner qu'un seul doublet PR et donc une pluralité de doublets PR sont générés. Des moyens permettant de ne sélectionner qu'un seul doublet sont décrits plus loin.

L'écart $\Delta v$ entre les deux raies du doublet PR peut varier, via le choix du nombre quantique de rotation J, de quelques dizaines de GHz au THz.

Dans le cas de $I_2$ l'écart de fréquence $\Delta v$ d'un doublet est connu et est calculable avec une très grande précision (< 100 MHz), dès l'instant où v et J sont connus.

L'écart $\Delta v$ se calcule grâce aux constantes moléculaires $B_v$, $D_v$ et $H_v$, qui sont connues pour la molécule d'iode.

$$\Delta v = c.\,|\,B_v(J_1 - J_2) + D_v(J_1^2 - J_2^2) + H_v(J_1^3 - J_2^3)| \qquad (1)$$

avec :

c vitesse de la lumière

$$J_1 = J(J + 1)$$

$$J_2 = (J + 2)(J + 3) \; si \; exitation \; R$$

$$J_2 = (J - 2)(J - 1) \; si \; exitation \; P$$

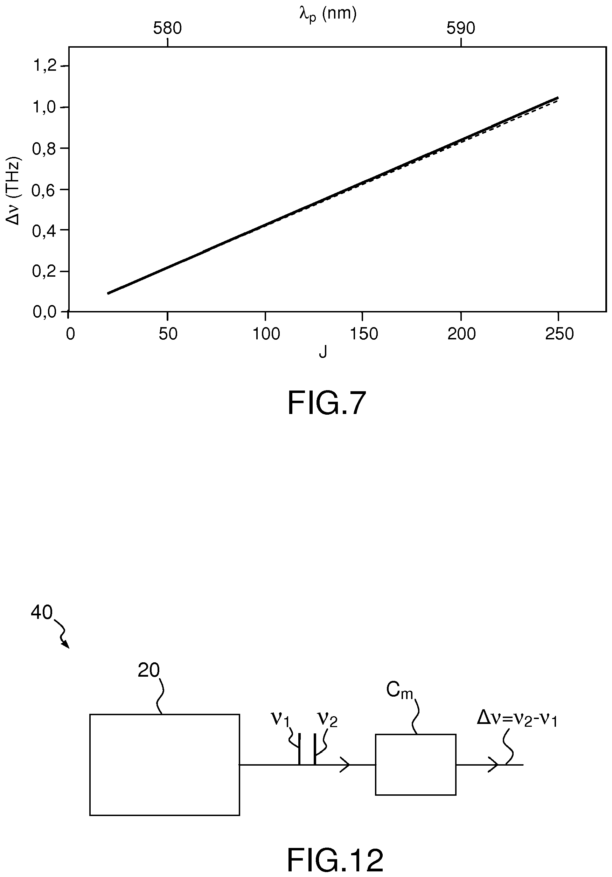

La figure 7 montre l'évolution de $\Delta v$ avec J pour les bandes vibrationnelles avec v" = 1, v' = 16 et v = 25. D'autres choix sont possibles. Dans une bande vibrationnelle v, l'écart $\Delta v$ varie d'environ 4 GHz pour un incrément d'une unité de J. Mais $\Delta v$ dépend aussi de v par le biais des constantes moléculaires $B_v$, $D_v$ et $H_v$ (formule 1). En changeant la valeur de v (par exemple par le choix d'un autre doublet PR), on obtient une courbe semblable mais légèrement décalée. Ainsi des milliers de $\Delta v$ sont facilement accessibles et uniformément répartis dans l'intervalle 30 GHz - 1 THz.

Il est important de noter que les deux fréquences $v_1$ et $v_2$ sont optiquement (sans moyen électronique) asservies sur des transitions moléculaires précises.

De plus ces raies stimulées sont très fines. Leur largeur, qui est liée à la largeur des modes du laser principal, est essentiellement limitée par la durée de l'impulsion laser. Par exemple pour une impulsion de 200 ns la largeur de la raie est d'environ 5 MHz.

Dans un mode de réalisation préféré, le laser d'excitation est configuré pour être accordable en longueur d'onde $\lambda_{ex}$ de sorte que le dispositif de sélection spectrale $D_{ss}$ soit apte à sélectionner au moins un doublet PR parmi une pluralité de doublets possibles, rendant le système 20 accordable en doublet de fréquence, c'est à dire accordable en $\Delta v$. Une longueur d'onde d'excitation dans l'orange, typiquement au voisinage de $\lambda_{ex}$=580 nm +/- 10 nm, permet d'exciter les transitions décrites ci-dessus.

Typiquement le laser d'excitation est un laser à colorant, un OPO, un laser à fibre, une diode laser...avec une largeur de raie inférieure à 10-15 GHz.

Dans une application THz, l'écart $\Delta v = v_1 - v_2$ devient l'onde THz générée dont la valeur $\Delta v$ déterminée avec une précision très élevée, car liée aux propriétés de la molécule ou de l'atome, peut donc devenir un standard THz pour des applications Telecom par exemple. Et un changement de longueur d'onde $\lambda_{ex}$ du laser d'excitation permet d'obtenir une source THz accordable et automatiquement asservie optiquement.

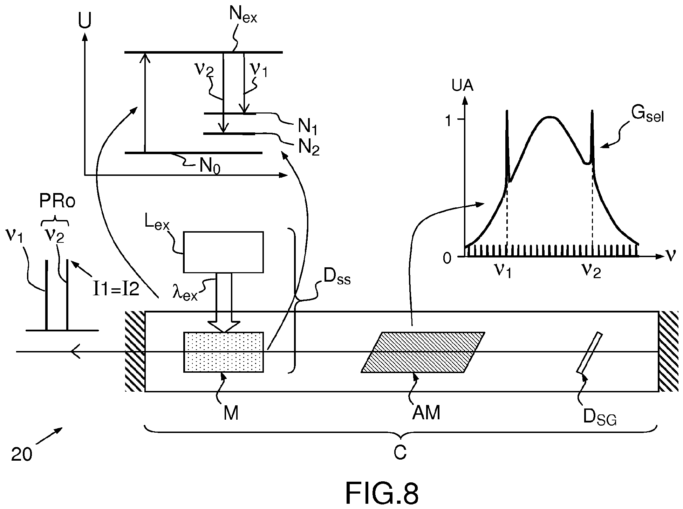

Selon un mode de réalisation préféré du système d'émission laser bi-fréquence 20 selon l'invention, le laser principal comprend en outre un dispositif limitatif de gain laser $D_{SG}$ disposé dans la cavité C et configuré pour réduire la larguer spectrale du gain laser sélectif $G_{sel}$ de manière à ce que le système d'émission soit configuré pour laser sur un doublet unique $PR_0$, tel qu'illustré figure 8.

Ce dispositif $D_{SG}$ permet d'obtenir une émission bi-fréquence d'une grande pureté spectrale, et le fait de laser sur un seul doublet stabilise l'émission laser. De plus, la puissance émise est concentrée sur un seul doublet. Un exemple d'un tel dispositif est décrit plus loin.

Avantageusement, le dispositif limitatif de gain laser $D_{SG}$ est en outre configuré pour ajuster le gain laser sélectif $G_{sel}$ de sorte qu'il présente une valeur identique pour la première fréquence $v_1$ et la deuxième fréquence $v_2$ du doublet unique $PR_0$. Dans ce cas, les raies d'émission correspondantes du laser principal présentent des intensités respectives $P_1$ et $P_2$ identiques. Un avantage est que l'efficacité de génération d'une onde de fréquence $\Delta v$ à l'aide d'un cristal non linéaire est meilleure lorsque les intensités sont égales.

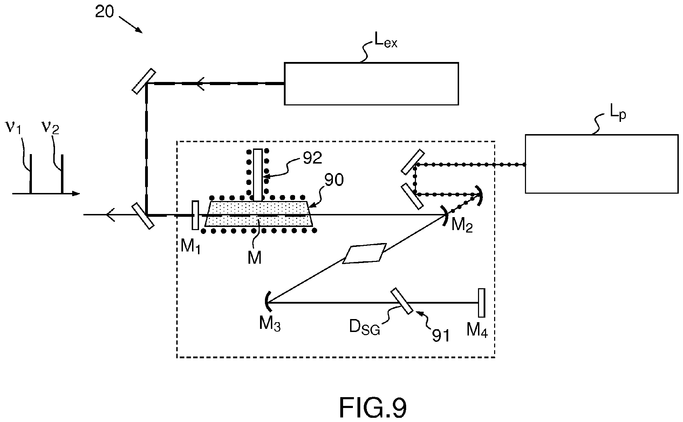

Un exemple d'implémentation du système 20 selon l'invention est illustré figure 9.

Le milieu AM du laser principal est un cristal de Ti:Sa , disposé dans une cavité en Z. Il ne s'agit que d'un exemple, d'autre type de cavité sont possibles tel que cavité linéaire ou en anneau. D'autres types de milieu amplificateur AM sont également possibles, tels que des colorants (dye), des gaz (Cu) ou d'autres milieux solides tel que le YAG, les cristaux contenant des ions $Cr^{+++}$, des diodes laser...

La courbe de gain initiale $G_{ini}$ du Ti:Sa est comprise entre 700 et 1000 nm.

Dans un des bras de la cavité C, le milieu M est constitué d'une cellule d'iode de 15 cm de long avec des fenêtres à l'angle de Brewster, incluse dans un four qui chauffe séparément le corps de la cellule 90 et le queusot 92 à des températures respectivement $T_1$ et $T_2$. $T_2$ doit toujours être inférieure à $T_1$ afin d'éviter la condensation de $I_2$ sur les fenêtres de la cellule, donc sur le trajet du faisceau laser.

$T_1$ et $T_2$ permettent de régler séparément la fonction de partition rotationnelle (maximum de population pour J donné) et la densité moléculaire (nombre de molécules par unité de volume).

Le laser principal Ti:Sa est pompé par une puissance modérée d'un laser $L_p$ Nd :YAG doublé en fréquence impulsionnel (2 W, 3 kHz, 40 ns). En l'absence du laser d'excitation $L_{ex}$ qui illumine la cellule d'iode, le laser principal Ti:Sa fonctionne en mode pulsé à une puissance moyenne de 100 mW, avec une largeur d'impulsion de 200 ns et une largeur spectrale d'environ 1 THz.

Dans l'autre bras, une lame biréfringente en quartz 91 convenablement taillée et orientée, constitue le dispositif limitatif de gain laser $D_{SG}$. Cette lame agit comme un filtre de Lyot à une lame. D'autres dispositifs (étalons très fins...) peuvent aussi assurer cette fonction.

La lame de quartz limite le spectre à environ 1THz par un réglage « grossier » de son orientation dans un plan perpendiculaire à sa surface, ce qui permet de sélectionner un seul doublet $PR_0$ dans toute la bande spectrale du Ti:Sa (700-1000 nm). Par un réglage fin de cette lame, on réalise une égalisation des intensités $P_1$ et $P_2$ du doublet $PR_0$.

Le laser d'excitation $L_{ex}$ est par exemple un laser à colorant accordable au voisinage de $\lambda_{ex}$ = 580 nmn, compatible de l'excitation des transitions décrites figures 5 et 6. Le laser $L_{ex}$ comprend également un filtre de Lyot et un étalon qui sélectionne une raie de largeur 10-15 GHz. Une rotation fine de l'étalon permet de se positionner sans ambiguïté sur une raie d'excitation de la molécule $I_2$.

Notons que les conditions d'utilisation du laser d'excitation (« pump » dans le vocabulaire du domaine de la spectroscopie) sont bien en dessous du seuil de lasage de la molécule $I_2$. Si on coupe le pompage du cristal Ti:Sa, le laser principal s'éteint. L'excitation de $I_2$ ne sert qu'à rajouter suffisamment de gain à la courbe de gain $G_{ini}$ du Ti:Sa, de manière très sélective et au bon moment, le transformant en $G_{sel}$, constituant ainsi une sorte de filtre positif dynamique comme expliqué plus haut.

La configuration choisie a pour objectif de diminuer le plus possible la puissance du laser d'excitation tout en obtenant de fortes puissances sur le doublet PR. La faible puissance requise pour le laser d'excitation rend possible l'utilisation de sources solides.

Afin de limiter au mieux la puissance d'excitation, on optimise les probabilités des transitions « pump » (excitation) et « dump » (émission stimulée) en choisissant convenablement les bandes vibrationnelles. Par exemple la bande vibrationnelle 16-1 (v"=1, v'=16) pour le laser d'excitation, et la bande 16-25 (v =25, v'=16) pour la bande vibrationnelle d'arrivée sur le niveau fondamental sont optimales. En effet la bande 16-1 a un très bon facteur de Franck-Condon (recouvrement des fonctions d'ondes vibrationnelles) et l'excitation, par une raie P, a permis d'exciter sans ambiguïté tous les niveaux rotationnels de J=21 à J=131 en variant la longueur d'onde du laser d'excitation de 578 nm à 585 nm (voir figure 7). Une largeur de raie du laser d'excitation de 10-15 GHz est largement suffisante car même s'il arrive que plusieurs raies d'absorption de $I_2$ soient excitées simultanément, la double sélectivité des Franck-Condon et de la lame de quartz 91 du laser principal est très efficace et permet de sélectionner un doublet unique $PR_0$. Il suffit d'effectuer une rotation de l'étalon du laser d'excitation pour choisir la raie d'excitation. Le réglage reste stable pendant des jours dans une salle climatisée ($\pm 1$ °C).

Le choix de la longueur d'onde de lasage du doublet (« dump ») à environ 800 nm a été dicté par plusieurs considérations.

Tout d'abord c'est le maximum de gain du cristal Ti:Sa.

D'autre part à 800 nm l'absorption de l'iode est négligeable (l'absorption intra-cavité poserait des problèmes de stabilité et de puissance). En effet, les toutes dernières raies d'absorption de la molécule d'iode observées sont à 12600 cm$^{-1}$ (794 nm) pour une pression de vapeur saturante de 5 torrs. Elles correspondent à la bande 0-15 (départ v" =15, excité v'=0).

Pour évaluer la population du niveau de départ, il suffit de savoir que le niveau v"=15 est à une énergie de 3067 cm$^{-1}$ et que $kT$ vaut 260 cm$^{-1}$ à 100 °C. Le rapport de populations entre ce niveau et le niveau vibrationnel fondamental (v"=0) est d'environ $7 \times 10^{-6}$ à cette température.

De plus la durée d'impulsion du Ti:Sa étant de 200 ns, la longueur équivalente d'absorption intra-cavité est d'environ 14 m (~45 allers retours pour une cellule de 15 cm). Sur cette distance et compte tenu de la population du niveau v"=15, l'absorption intra-cavité est négligeable. On voit donc ici le double avantage de travailler à 800 nm et en régime impulsionnel.

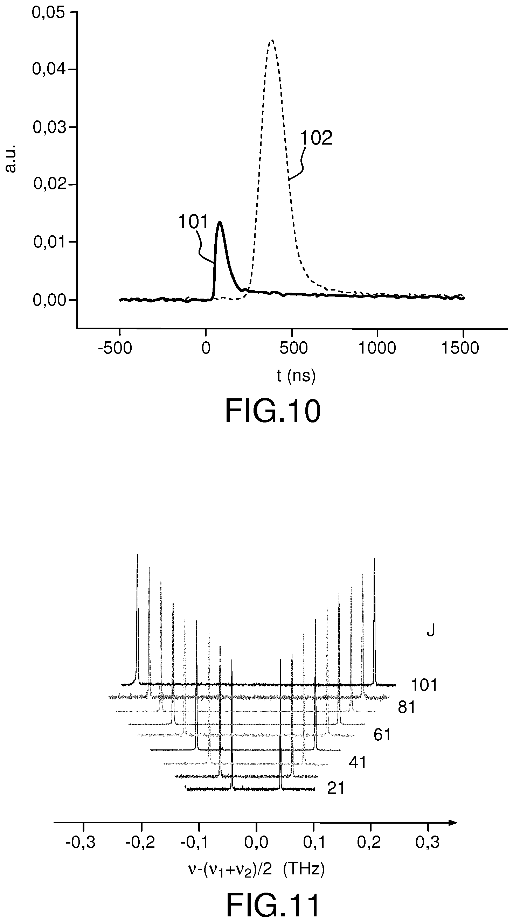

Les impulsions d'excitation « pump » 101 et du laser principal « dump » 102 sont illustrées figure 10. Le laser d'excitation présente une raie de 10 GHz continûment balayable sur environ 10 nm autour de 580 nm, un taux de répétition de 3 kHz, et une impulsion 101 d'une durée de 80 ns, synchronisée sur l'impulsion 102 du laser principal Ti:Sa. Le laser d'excitation $L_{ex}$ « pump » a une puissance moyenne de quelques mW. Une des clés est le moment où le gain-$I_2$ est injecté (figure 10). L'expérience montre qu'il faut injecter l'impulsion d'excitation dans le « built-up » de l'impulsion Ti:Sa, c'est-à-dire pendant la période où se construit l'inversion de population des niveaux du Ti :Sa mise en jeu.

En variante, une ligne à retard est rajoutée pour optimiser ce paramètre. Elle permet de diminuer significativement la puissance du « pump » nécessaire au lasage à 100% sur le doublet $PR_0$. Mais la ligne à retard n'est pas nécessaire si on dispose de suffisamment de puissance, il suffit que l'impulsion soit dans le « built-up ».

La puissance nécessaire pour la saturation de la transition entre le niveau fondamental de l'iode et le niveau d'excitation, permettant d'obtenir deux raies simultanées et stables, est bien connue et faible.

Le chauffage de la cellule d'iode (température $T_1$) permet de déplacer le maximum de population rotationnelle (fonction de partition) du niveau fondamental et le chauffage du queusot ($T_2$) permet d'augmenter la densité moléculaire par augmentation de la pression de vapeur saturante.

En pratique, les deux effets (maximum de population rotationnelle et augmentation de la densité moléculaire) sont liés car il faut maintenir les fenêtres de la cellule à une température plus élevée que le queusot afin d'éviter la condensation des molécules sur les fenêtres de la cellule d'iode et donc sur le trajet du faisceau intra-cavité ($T_1 > T_2$).

L'augmentation de la densité moléculaire obtenue par chauffage du queusot ($T_2$) est significative : on passe d'une pression de vapeur saturante de 0.25 torr à 5 torrs pour une température respectivement de 20 °C et 60 °C.

On pourrait s'inquiéter des collisions dues à l'augmentation de la température $T_2$. Elles sont en effet très efficaces entre les molécules $I_2$ de l'état électronique excité et celles du fondamental. Ces collisions pourraient avoir pour effet de « quencher » (c'est-à-dire faire chuter) le gain. Mais, avec un taux de transfert collisionnel total ($I_2$ excité avec $I_2$ fondamental) du niveau $v$'=16 d'environ $10^{-9}$ molecule$^{-1}$ s$^{-1}$, les collisions n'ont pas encore le temps d'agir en 200 ns. Les collisions n'ont pas le temps d'affecter le gain-$I_2$, même à 100 °C. Ceci constitue un autre avantage au régime impulsionnel décrit ci-dessus.

Typiquement des températures $T_1$ et $T_2$ de l'ordre respectivement de 100 °C et 80° C sont bien adaptées pour $I_2$.

La figure 11 décrit une suite de spectres expérimentaux de l'onde optique émise par le laser Ti:Sa, le laser d'excitation étant positionné sur la bande 16-1 pour J variant de 21 à 101 par pas de 10. Notons encore qu'expérimentalement toutes les valeurs de J (par pas de 1) ont été obtenues dans cet intervalle. Les fréquences recentrées sur $(v_1+v_2)/2$ montrent un écart qui varie presque linéairement avec J, ce qui est conforme au calcul. Le réglage de l'égalité des intensités dans le doublet est réalisé avec la rotation fine de la lame de quartz.

Ainsi, un avantage de la méthode est qu'il suffit de changer la longueur d'onde du laser d'excitation pour obtenir un laser dual présentant deux fréquences telles que $\Delta v$ est dans le domaine THz, $\Delta v$ étant accordable et automatiquement asservi à la valeur absolue déterminée par les constantes moléculaires.

Selon un autre aspect l'invention concerne un système 40 de génération d'une onde de fréquence THz illustré figure 12 et comprenant :

- un système d'émission laser bi-fréquence selon l'invention 20 dans lequel le dispositif de sélection spectral $D_{ss}$ est configuré de sorte que la différence $\Delta v$ entre $v_1$ et $v_2$ soit comprise entre 30 GHz et 10 THz,
- un composant optique mélangeur $C_m$ configuré pour être éclairé par un faisceau laser issu du système 20 et pour générer une onde présentant une fréquence égale à la différence $\Delta v$.

La génération de la différence à l'aide d'un cristal non linéaire connu est classique. Dans l'exemple d'implémentation du système 20 décrit précédemment figure 9 une puissance moyenne de 100 mW a été obtenu sur chaque raie du doublet, avec une durée d'impulsion de 200 ns, ce qui équivaut à une puissance crête supérieure à 100 W. Cette puissance est largement suffisante pour générer la fréquence différence dans un cristal non linéaire tel que le DAST ou le PPLN par DFG (Pour « Différence Frequency Génération » en vocabulaire anglo saxon) extra cavité (au delà il y a des risques de dommage des cristaux actuellement disponibles).

A noter qu'en variante le cristal $C_m$ peut également être positionné intra cavité, c'est-à-dire dans la cavité du laser principal.

Selon un autre aspect l'invention concerne un système 50 d'émission laser bi-fréquence décalé en fréquence comprenant :

- un système d'émission laser bi-fréquence 20 selon l'invention, et
- un composant optique $C_{shift}$ disposé à l'intérieur de la cavité et configuré pour décaler chacune des fréquences du système 20, respectivement la première fréquence $v_1$ et la deuxième fréquence $v_2$ d'une valeur de décalage fr à chaque aller-retour dans la cavité. La valeur du décalage fr correspond à une radiofréquence, typiquement comprise entre 1 MHz et quelques dizaines de GHz suivant le type de dispositif $C_{shift}$ utilisé.

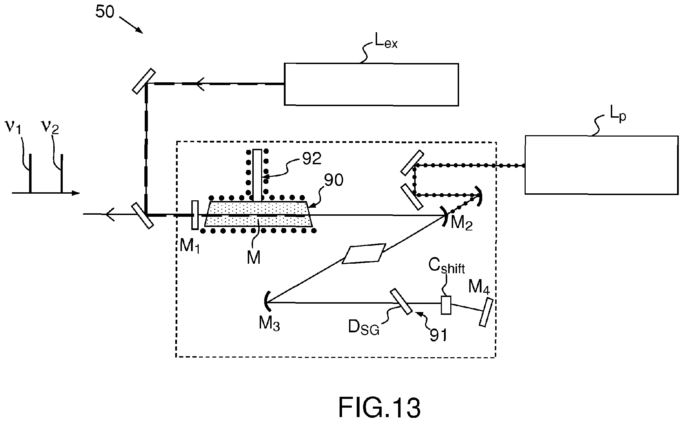

Préférentiellement, tel qu'illustré figure 13, le composant optique $C_{shift}$ est un cristal acousto-optique AO configuré pour fonctionner dans l'ordre 1. Dans cette configuration préférée, le modulateur acousto-optique à la particularité de générer deux faisceaux $Fa_1$ et $Fa_2$ correspondant aux deux fréquences centrales $v_1$ et $v_2$. Comme dit plus haut, les deux fréquences $v_1$ et $v_2$ sont décalées en fréquence de deux fois la fréquence acoustique $v_a$ ($fr=2.v_a$) à chaque aller-retour. Par contre, les deux faisceaux $Fa_1$ et $Fa_2$ présentent entre eux un angle non nul, et il convient de les réaligner de façon à ce que chaque faisceau se réfléchisse sur le miroir de fond de cavité $M_4$ en incidence normale. Cet alignement est par exemple réalisé à l'aide d'un prisme ou d'une lentille. Le miroir $M_4$ peut aussi être cylindrique. (non représenté figure 13).

Un laser présentant une fréquence de lasage unique, décalé en fréquence intra-cavité par un modulateur acousto-optique, est connu de l'homme du métier sous l'acronyme « Frequency Shifted Feedback laser » ou « modeless laser » (laser à « décalage de fréquence intra-cavité » ou « sans mode » en français). Le décalage en fréquence de la fréquence laser a pour effet de modifier la structure du mode, avec un champ électrique dont la phase devient une fonction quadratique du temps. La raie laser est dite « chirpée», c'est-à-dire décalée en fréquence de manière continue. Ces lasers trouvent à s'appliquer par exemple en télémétrie : les interférences entre deux bras d'un interféromètre présentent des composantes spectrales fonction de la distance à mesurer.

Un laser 50 bi-fréquence à fréquence « chirpée » selon l'invention permet d'atteindre des résolutions et un fonctionnement améliorés pour des applications télémétries, et ouvre de nouveaux champs d'applications, tels que l'imagerie en milieu diffusant.

**Revendications**

1. Système d'émission laser bi-fréquence (20) comprenant :

   - un laser dit principal comprenant un milieu amplificateur (AM) disposé dans une cavité laser (C) et un moyen de pompage dudit milieu amplificateur, le laser principal étant configuré pour laser dans ladite cavité et selon un gain laser initial ($G_{ini}(v)$) fonction d'une fréquence optique, le système étant **caractérisé en ce qu'**il comprend en outre:
   - un dispositif de sélection spectrale ($D_{ss}$) comprenant :

     *un milieu moléculaire ou monoatomique (M) en phase gazeuse disposé dans ladite cavité laser, et

*un laser dit d'excitation ($L_{ex}$) présentant une longueur d'onde d'excitation ($\lambda_{ex}$) configurée pour exciter, par absorption optique, un niveau énergétique d'excitation ($N_{ex}$) dudit milieu,

*ledit milieu étant configuré pour émettre, par désexcitation radiative dudit niveau énergétique d'excitation vers un premier ($N_1$) et un deuxième ($N_2$) niveaux énergétiques de plus basse énergie , au moins un doublet de fréquence comprenant une première fréquence ($v_1$) associée audit premier niveau ($N_1$) et une deuxième fréquence ($v_2$) associée audit deuxième niveau ($N_2$), lesdites première et deuxième fréquences présentant chacune une valeur comprise dans ledit gain laser initial du milieu amplificateur (AM) et choisie de manière à ce qu'un rayonnement associé ne soit pas réabsorbé par ledit milieu (M),

- le laser d'excitation étant configuré pour que la transition entre un niveau fondamental dudit milieu et ledit niveau énergétique d'excitation soit saturée, et la densité moléculaire ou atomique étant suffisamment élevée, de sorte que ledit gain laser initial ($G_{ini}(v)$) du laser principal soit modifié en un gain laser sélectif ($G_{sel}(v)$) par augmentation locale dudit gain laser initial auxdites fréquences ($v_1$, $v_2$) dudit doublet, ledit laser principal étant alors configuré pour laser en phase, simultanément et uniquement sur lesdites fréquences ($v_1$, $v_2$) dudit au moins un doublet.

2. Système selon la revendication 1 dans lequel :

- le milieu moléculaire en phase gazeuse est un milieu moléculaire diatomique configuré pour générer une pluralité de doublets de type ro-vibrationnel (PR),
- ledit niveau énergétique d'excitation correspond à un niveau de rotation et de vibration d'un état électronique excité ($E_{ex}$),
- lesdits premier ($N_1$) et deuxième ($N_2$) niveaux énergétiques appartiennent au même niveau électronique ($E_0$) et sont **caractérisés par** un même état vibrationnel (v) et respectivement un premier (J) et un deuxième (J+/- 2) état rotationnel de ladite molécule,

lesdits premier et deuxième états rotationnels présentant respectivement un nombre quantique de rotation (J, J-2 ou J+2) tel que la différence est égale à 2 en valeur absolue.

3. Système selon les revendications 1 ou 2 dans lequel le milieu moléculaire (M) comprend de l'iode ($I_2$).

4. Système selon l'une des revendications précédentes dans lequel le laser d'excitation est configuré pour être accordable en longueur d'onde de sorte que le dispositif de sélection spectrale soit apte à sélectionner au moins un doublet parmi une pluralité de doublets possibles, rendant ledit système accordable en doublet de fréquence.

5. Système selon l'une des revendications précédentes dans lequel le laser principal comprend en outre un dispositif limitatif de gain laser ($D_{SG}$) disposé dans ladite cavité (C) et configuré pour réduire la largeur spectrale du gain laser sélectif ($G_{sel}$) de manière à ce que ledit système d'émission soit configuré pour laser sur un doublet unique.

6. Système selon la revendication 5 dans lequel ledit dispositif limitatif de gain laser ($D_{SG}$) est en outre configuré pour ajuster le gain laser sélectif ($G_{sel}$) de sorte que ledit gain laser sélectif présente une valeur identique pour lesdites première et deuxième fréquences dudit doublet unique, des première et deuxième raies d'émission dudit laser principal, respectivement auxdites première ($v_1$) et deuxième ($v_2$) fréquence, présentant alors des intensités respectives ($P_1$, $P_2$) identiques.

7. Système selon l'une des revendications 5 ou 6 dans lequel ledit dispositif limitatif de gain ($D_{SG}$) est une lame de quartz réglable en rotation.

8. Système selon l'une des revendications précédentes dans lequel le laser principal fonctionne en régime impulsionnel.

9. Système selon l'une des revendications précédentes dans lequel le laser principal est un laser Ti:Sa présentant une cavité en Z.

10. Système selon l'une des revendications précédentes dans lequel ladite saturation de ladite transition et l'obtention de ladite densité moléculaire sont obtenues par chauffage d'une cellule comprenant ledit milieu monoatomique ou moléculaire en phase gazeuse.

11. Système de génération d'une onde de fréquence TeraHz comprenant :

- un système d'émission laser bi-fréquence selon l'une des revendications 1 à 10 dans lequel ledit dispositif de sélection spectrale ($D_{ss}$) est configuré de sorte que la différence ($\Delta v$) entre lesdites première ($v_1$) et deuxième ($v_2$) fréquences soit comprise entre 30 GHz et 10 THz, et comprenant en outre :
- un composant mélangeur ($C_m$) configuré pour être éclairé par un faisceau laser issu dudit système et pour générer une onde présentant une fréquence égale à ladite différence ($\Delta v$).

12. Système d'émission laser bi-fréquence décalé en fréquence comprenant :

- un système d'émission laser bi-fréquence selon l'une des revendications 1 à 10,
- un composant optique ($C_{shift}$) disposé à l'intérieur de la cavité et configuré pour décaler chacune desdites première ($v_1$) et deuxième ($v_2$) fréquences d'une valeur de décalage (fr) à chaque aller-retour dans la cavité d'un photon auxdites fréquences, ladite valeur de décalage correspondant à une radiofréquence.

13. Système d'émission laser bi-fréquence décalé en fréquence selon la revendication 12 dans lequel le composant optique ($C_{shift}$) est un cristal acousto-optique configuré pour fonctionner dans l'ordre 1.


**Patentansprüche**

1. Bi-Frequenz Laseremissionssystem (20), Folgendes beinhaltend:

- einen Hauptlaser genannten Laser, beinhaltend ein Verstärkungsmedium (AM), welches in einem Laserhohlraum (C) angeordnet ist und ein Pumpmittel des Verstärkungsmediums, wobei der Hauptlaser zum Lasern in dem Hohlraum und gemäß einer Anfangs-Laserverstärkung ($G_{ini}(v)$) konfiguriert ist, welche von einer optischen Frequenz abhängt, wobei das System **dadurch gekennzeichnet ist, dass** es zudem Folgendes beinhaltet:
- eine Vorrichtung zur spektralen Selektion ($D_{ss}$), Folgendes beinhaltend:

  * ein molekulares oder einatomiges Medium (M) in der Gasphase, welches in dem Laserhohlraum angeordnet ist, und
  * einen Erregungslaser ($L_{ex}$) genannten Laser, welcher eine Erregungswellenlänge ($\lambda_{ex}$) aufweist, welche konfiguriert ist, um durch optische Absorption ein Erregungsenergieniveau ($N_{ex}$) des Mediums zu erregen,
  * wobei das Medium konfiguriert ist, um durch strahlende Entregung des Erregungsenergieniveaus auf ein erstes ($N_1$) und ein zweites ($N_2$) Energieniveau mit geringerer Energie mindestens eine Frequenzdublette zu emittieren, beinhaltend eine erste Frequenz ($v_1$), welche dem ersten Niveau ($N_1$) zugeordnet ist, und eine zweite Frequenz ($v_2$), welche dem zweiten Niveau ($N_2$) zugeordnet ist, wobei die erste und die zweite Frequenz jeweils einen Wert aufweisen, welcher in der Anfangs-Laserverstärkung des Verstärkungsmediums (AM) enthalten und so gewählt ist, dass eine zugeordnete Strahlung nicht durch das Medium (M) rückabsorbiert wird,

- wobei der Erregungslaser konfiguriert ist, damit der Übergang zwischen einem Grundniveau des Mediums und dem Erregungsenergieniveau gesättigt ist, und wobei die molekulare oder atomare Dichte hoch genug ist, dass die Anfangs-Laserverstärkung ($G_{ini}(v)$) des Hauptlasers zu einer selektiven Laserverstärkung ($G_{sel}(v)$) durch lokale Erhöhung der Anfangs-Laserverstärkung bei den Frequenzen ($v_1$, $v_2$) der Dublette verändert wird, wobei der Hauptlaser dann konfiguriert ist, um phasengleich, gleichzeitig und ausschließlich in den Frequenzen ($v_1$, $v_2$) der mindestens einen Dublette zu lasern.

2. System nach Anspruch 1, bei welchem:

- das molekulare Medium in der Gasphase ein zweiatomiges molekulares Medium ist, welches konfiguriert ist, um eine Vielzahl von rotations-vibrationellen Dubletten (PR) zu erzeugen,
- das Erregungsenergieniveau einem Rotations- und Vibrationsniveau eines erregten Elektronenzustandes ($E_{ex}$) entspricht,
- das erste ($N_1$) und das zweite ($N_2$) Energieniveau demselben Elektronenniveau ($E_0$) gehören und durch einen gleichen Vibrationszustand (v) und jeweils einen ersten (J) und einen zweiten (J+/- 2) Rotationszustand des Moleküls gekennzeichnet sind,

der erste und der zweite Rotationszustand jeweils eine derartige Rotations-Quantenzahl (J, J-2 oder J+2) aufweisen, dass die Differenz in absoluten Werten gleich 2 ist.

3. System nach den Ansprüchen 1 oder 2, bei welchem das molekulare Medium (M) Jod ($I_2$) beinhaltet.

4. System nach einem der vorhergehenden Ansprüche, bei welchem der Erregungslaser konfiguriert ist, um in Bezug auf die Wellenlänge in einer Weise abstimmbar zu sein, dass die Vorrichtung zur spektralen Selektion in der Lage ist, mindestens eine Dublette aus einer Vielzahl von möglichen Dubletten zu selektieren, wodurch sie das System in Bezug auf eine Frequenz-Dublette abstimmbar macht.

5. System nach einem der vorhergehenden Ansprüche, bei welchem der Hauptlaser zudem eine Vorrichtung zur Begrenzung der Laserverstärkung ($D_{SG}$) beinhaltet, welche in dem Hohlraum (C) angeordnet und konfiguriert ist, um die spektrale Breite der selektiven Laserverstärkung ($G_{sel}$) so zu reduzieren, dass das Emissionssystem konfiguriert ist, um auf eine einzige Dublette zu lasern.

6. System nach Anspruch 5, bei welchem die Vorrichtung zur Begrenzung der Laserverstärkung ($D_{SG}$) zudem konfiguriert ist, um die selektive Laserverstärkung ($G_{sel}$) so anzupassen, dass die selektive Laserverstärkung einen identischen Wert für die erste und die zweite Frequenz der einzigen Dublette, wobei eine erste und eine zweite Emissionslinie des Hauptlasers jeweils bei der ersten (v1) und der zweiten (v2) Frequenz dann jeweilige identische Intensitäten ($P_1$, $P_2$) aufweisen.

7. System nach einem der Ansprüche 5 oder 6, bei welchem die Vorrichtung zur Verstärkungsbegrenzung ($D_{SG}$) ein drehverstellbares Quarzblättchen ist.

8. System nach einem der vorhergehenden Ansprüche, bei welchem der Hauptlaser im Impulsbetrieb arbeitet.

9. System nach einem der vorhergehenden Ansprüche, bei welchem der Hauptlaser ein Ti:Sa-Laser ist, welcher einen Z-förmigen Hohlraum aufweist.

10. System nach einem der vorhergehenden Ansprüche, bei welchem die Sättigung des Übergangs und die Erzielung der Molekulardichte durch Erhitzen einer Zelle erzielt werden, welche das einatomige oder molekulare Medium in der Gasphase beinhaltet.

11. System zum Erzeugen einer Terahertz-Frequenzwelle, Folgendes beinhaltend:

- ein Bi-Frequenz Laseremissionssystem nach einem der Ansprüche 1 bis 10, bei welchem die Vorrichtung zur spektralen Selektion ($D_{ss}$) so konfiguriert ist, dass die Differenz ($\Delta v$) zwischen der ersten (v1) und der zweiten (v2) Frequenz zwischen 30 GHz und 10 THz liegt, welches zudem Folgendes beinhaltet:
- eine Mischerkomponente ($C_m$), welche konfiguriert ist, um durch einen Laserstrahl beleuchtet zu werden, welcher aus dem System stammt, und um eine Welle zu erzeugen, welche eine Frequenz gleich der Differenz ($\Delta v$) aufweist.

12. Frequenzverschobenes Bi-Frequenz-Laseremissionssystem, Folgendes beinhaltend:

- ein Bi-Frequenz Laseremissionssystem nach einem der Ansprüche 1 bis 10,
- eine optische Komponente ($C_{Shift}$), welche innerhalb des Hohlraums angeordnet und konfiguriert ist, um jede der ersten (v1) und der zweiten (v2) Frequenz um einen Verschiebungswert (fr) bei jedem Hin- und Rückweg eines Photons in dem Hohlraum bei diesen Frequenzen zu verschieben, wobei der Verschiebungswert einer Funkfrequenz entspricht.

13. Frequenzverschobenes Bi-Frequenz-Laseremissionssystem nach Anspruch 12, bei welchem die optische Komponente ($C_{shift}$) ein zum Betrieb in der 1. Ordnung konfiguriertes akusto-optisches Kristall ist.

**Claims**

1. A bi-frequency laser emission system (20) comprising:

- a laser, called main laser, comprising an amplifying medium (AM) disposed in a laser cavity (C) and a means for pumping said amplifying medium, the main laser being configured for lasering in said cavity and in accordance with an initial laser gain ($G_{ini}(v)$) as a function of an optical frequency, the system being **characterised in that** it further comprises:
- a spectral selection device ($D_{ss}$) comprising:

* a gaseous phase molecular or monoatomic medium (M) disposed in said laser cavity; and
* a laser, called excitation laser ($L_{ex}$), having an excitation wavelength ($\lambda_{ex}$) configured for exciting, through optical absorption, an excitation energy level ($N_{ex}$) of said medium;
* said medium being configured to emit, through radiative de-excitation of said excitation energy level to a first ($N_1$) and a second ($N_2$) energy level with lower energy, at least one frequency doublet comprising a first frequency ($v_1$) associated with said first level ($N_1$) and a second frequency ($v_2$) associated with said second level ($N_2$), said first and second frequencies each having a value included in said initial laser gain of said amplifying medium (AM) and selected so that an associated radiation is not reabsorbed by said medium (M);

- the excitation laser being configured so that the transition between a fundamental level of said medium and said excitation energy level is saturated and the molecular or atomic density being high enough, such that said initial laser gain ($G_{ini}(v)$) of the main laser is changed into a selective laser gain ($G_{sel}(v)$) through local enhancement of said initial laser gain at said frequencies ($v_1$, $v_2$) of said doublet, said main laser then being configured for lasering in phase, simultaneously and only on said frequencies ($v_1$, $v_2$), of said at least one doublet.

2. The system as claimed in claim 1, wherein:

- the gaseous phase molecular medium is a diatomic molecular medium configured for generating a plurality of doublets of the rotational-vibrational type (PR);
- said excitation energy level corresponds to a level of rotation and of vibration of an excited electronic state ($E_{ex}$);
- said first ($N_1$) and second ($N_2$) energy levels belong to the same electronic level ($E_0$) and are **characterised by** the same vibrational state (v) and respectively a first (J) and a second (J+/-2) rotational state of said molecule;

said first and second rotational states respectively having a rotational quantum number (J, J-2 or J+2), such that the difference is 2 as an absolute value.

3. The system as claimed in claims 1 or 2, wherein the molecular medium (M) comprises iodine ($I_2$).

4. The system as claimed in any one of the preceding claims, wherein the excitation laser is configured to be wavelength tunable such that the spectral selection device is able to select at least one doublet from among a plurality of possible doublets, making said system frequency doublet tunable.

5. The system as claimed in any one of the preceding claims, wherein the main laser further comprises a laser gain limiting device ($D_{SG}$) disposed in said cavity (C) and configured to reduce the spectral width of the selective laser gain ($G_{sel}$) so that said emission system is configured for lasering onto a single doublet.

6. The system as claimed in claim 5, wherein said laser gain limiting device ($D_{SG}$) is also configured to adjust the selective laser gain ($G_{sel}$) such that said selective laser gain has an identical value for said first and second frequencies of said single doublet, first and second emission rays of said main laser, respectively at said first ($v_1$) and second ($v_2$) frequencies, then having identical respective intensities ($P_1$, $P_2$).

7. The system as claimed in any one of claims 5 or 6, wherein said gain limiting device ($D_{SG}$) is a rotation adjustable quartz plate.

8. The system as claimed in any one of the preceding claims, wherein the main laser functions for pulsed operation.

9. The system as claimed in any one of the preceding claims, wherein the main laser is a Ti:Sa laser having a Z-shaped cavity.

10. The system as claimed in any one of the preceding claims, wherein said saturation of said transition and the obtention of said molecular density are achieved by heating a cell comprising said gaseous phase monoatomic or molecular medium.

11. A system for generating a TeraHz frequency wave comprising:

- a bi-frequency laser emission system as claimed in any one of claims 1 to 10, wherein said spectral selection device ($D_{ss}$) is configured so that the difference ($\Delta v$) between said first ($v_1$) and second ($v_2$) frequencies is between 30 GHz and 10 THz, and further comprising:
- a mixer component ($C_m$) configured to be illuminated by a laser beam originating from said system and to generate a wave having a frequency that is equal to said difference ($\Delta v$).

12. A frequency shifted bi-frequency laser emission system comprising:

- a bi-frequency laser emission system as claimed in any one of claims 1 to 10;
- an optical component ($C_{shift}$) disposed inside the cavity and configured to shift each of said first ($v_{11}$) and second ($v_2$) frequencies by a shift value (fr) for each round trip of a photon in the cavity at said frequencies, said shift value corresponding to a radio frequency.

13. The frequency shifted bi-frequency laser emission system as claimed in claim 12, wherein the optical component ($C_{shift}$) is an acousto-optic crystal configured to operate in the first-order.

FIG.1

FIG.2

$N_{ex}$

$\nu_2$    $\nu_1$

$N_1 = E_1$

$N_2 = E_2$

$N_0$

# FIG.3

$E_{ex}$

$E_o$

$\Delta E \sim 17.10^3 \; cm^{-1}$

$\Delta Er \sim 2(J+1) \times 0.04 \; cm^{-1}$

$N_1$-J

$N_2$-J±2

Etats rotationels J

$\Delta E_v \sim 200 \; cm^{-1}$

Etats vibrationels v

# FIG.4

FIG.5

FIG.6

FIG.7

FIG.12

**FIG.8**

FIG.9

FIG.10

FIG.11

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Dual wavelength continuous wave laser using a biréfringent filter. *J.Europ. Soc. Rap. Public.,* 2013, vol. 8, 13021

- Stable dual-wavelengh microlaser controlled by the output mirror tilt angle. *Appl. Phys. Lett.,* 2011, vol. 99, 241113